# EUROPEAN PATENT SPECIFICATION

(11) **EP 1 696 815 B1**
(45) Date of publication and mention of the grant of the patent: **15.08.2018**
(21) Application number: 04820331.9
(22) Date of filing: 06.12.2004
(51) Int. Cl.: A61C 8/00

(54) **IMPLANT**
IMPLANTAT
IMPLANT

(30) Priority: 11.12.2003 SE 0303322
(43) Date of publication of application: 06.09.2006
(60) Divisional application: 10009889.6
(73) Proprietor: Nobel Biocare Services AG, 8058 Zürich-Flughafen (CH)
(72) Inventor: HALL, Jan, 402 26 Göteborg (SE)
(74) Representative: Jensen, Olaf Sven
(86) International application number: PCT/SE2004/001805
(87) International publication number: WO 2005/055859

(56) References cited:
- EP-A1- 1 013 236
- WO-A-03/005928
- WO-A-03/015654
- WO-A1-97/03621
- WO-A1-03/030767
- WO-A1-03/055406
- WO-A1-2004/098442
- WO-A2-01/49199
- DE-A1- 4 130 891
- JP-A- H06 304 185
- US-A- 4 723 913
- US-A- 5 222 983
- US-A- 5 588 838
- US-A1- 2003 104 338

## Description

### FIELD OF INVENTION

The present invention relates to an implant to be fitted in a hole in bone (jaw bone) with associated soft tissue. The implant comprises a portion that can be placed against the upper edge of the bone.

### BACKGROUND OF INVENTION

Such implants are already well known and are available on the market. The implant is generally provided with an outer thread by means of which it can be firmly screwed into the hole, which in turn can be threaded or unthreaded. In known implants, said portion bearing against the upper edge of the jaw bone can have a thread of general character or have ridges and depressions which extend, for example, in the vertical direction of the implant. The implant can comprise or support a spacer sleeve, prosthesis etc., which can be arranged with threads or surface-treated areas which can be placed against said upper edge of the jaw bone. These threads too are of a general character.

In the field of implants, a general problem is that of avoiding bone absorption, after a time, at the upper areas of the implant near its attachment components (spacers, prosthesis, etc.). Bone absorption means that said upper parts are exposed, which gives rise to poor esthetic results. This exposure also means that bacteria and organisms tending to cause inflammation can penetrate down to the lower parts of the implant. These disadvantages may in some cases lead to the implant having to be refitted. The object of the present invention is to solve this problem, inter alia.

The present invention uses the knowledge that certain specifically arranged grooves and/or recesses can provide for effective bone movement and ingrowth of bone into the actual groove and/or recesses. The bone movement and ingrowth stimulated by the groove and recesses gives rise to good integration between the implant part (titanium part) in question and the bone. Reference may be made in this respect to WO 97/05238 (Boyde) and to the patent application SE 02.03896-6 filed by the Applicant of the present patent application.

WO 03/015654 A1 discloses a screw implant for insertion into a bore hole arranged in bone tissue, said implant having a cancellous portion, and a cortical portion provided both with threading. The screw thread height in the cortical portion being no greater than 0.20 mm, preferably in the range 0.02-0.15 mm and most preferably 0.05-0.15 DE 4130891 A discloses an implant comprising a groove, the depth of which is a few to several hundred micrometers and the width of which is a few micrometers to several millimeters.

WO 03/055406 A1 discloses an implant with a roughness having a topography forming waves which extend substantially parallel to the threading of said implant. JPH06304185 discloses a threaded dental implant with a groove having a semi circular profile in its upper part, said groove having a width of 0,1 to 1 mm, and a depth 50 to 300 µm.

### DISCLOSURE OF INVENTION

The object of the invention is an implant designed to be fitted in a hole formed in jaw bone and overlying soft tissue, and comprising a portion intended to be placed against the upper edge of the jaw bone,wherein the portion is provided with a groove, wherein the groove extends all round the surface, is located at the upper parts of the portion and extends in a cross section at right angles to the longitudinal axis of the implant,the groove having a depth (D) of 50 - 100 µm, a width (B) of 70 - 160 µm, and a cross section with a shape selected from the group consisting of: semi-circular, hyperbola, semi-elliptical, and rectangular or square with rounded corners,wherein the implant further comprises an outer thread by means of which the implant can be screwed into the hole. Further embodiments appear from the sub-claims.

By means of what has been proposed above, an effective barrier can be obtained by means of bone growing into the groove or recesses. Subsidence of bone and soft tissue is effectively avoided in this way. Said prevention of subsidence means there is improved contact and retention of the soft tissue against said upper parts too. Exposure of implant parts lying below the portion of the implant in question and/or the implant attachment component is effectively avoided, which affords considerable advantages for purely esthetic reasons. In addition, penetration of bacteria or organisms of a kind tending to cause inflammation is also avoided. The grooves and/or recesses can be obtained by turning, milling, engraving, etching, shot-peening, laser machining, etc.

### BRIEF DESCRIPTION OF THE DRAWINGS

A presently proposed example of an implant will be described below with reference to the attached drawings, in which:
- Figure 1: shows a vertical cross section through parts of a previously known implant fitted in a hole in bone in the form of jaw bone and soft tissue,
- Figure 2: shows a vertical cross section through parts of the novel implant,
- Figure 3: shows a vertical cross section through a second example of an implant, which is not part of the present invention, fitted in a jaw bone,
- Figure 4: shows a vertical cross section through an enlargement of a groove structure in an implant (partially shown) and jaw bone,
- Figure 5: shows a greater enlargement compared to Figure 4, illustrating the structure of a groove or recess used in conjunction with the implant according to Figures 2 and 3.

### DETAILED DESCRIPTION OF EMBODIMENTS

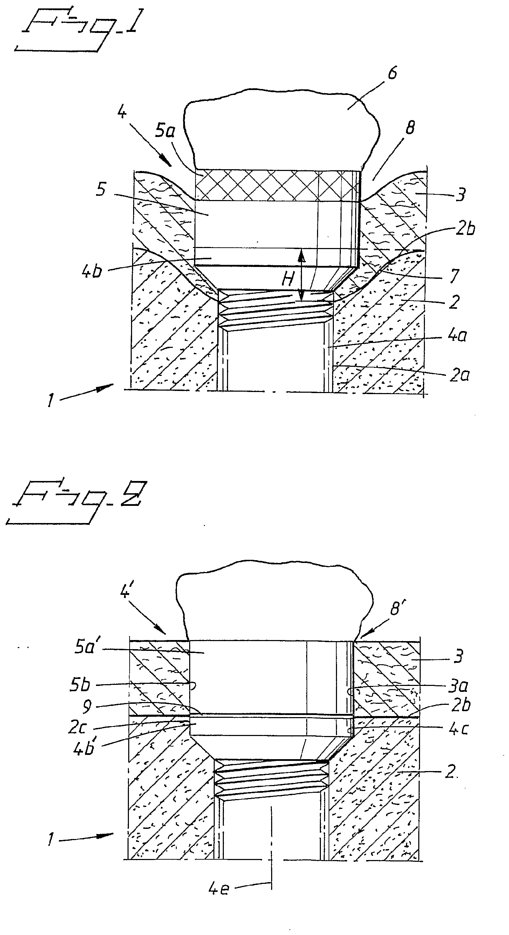

In Figure 1, reference number 1 generally designates parts of a jaw bone 2 and soft tissue 3 lying over the latter. An implant is generally indicated by reference number 4 and is screwed into the jaw bone in a hole 2a formed in the latter. The hole can be threaded or unthreaded before the implant is screwed in. The implant in turn comprises an outer thread 4a by means of which the implant can be screwed into the hole 2a. At its upper parts, the implant is provided with a portion 4b that can initially be placed against an upper edge 2b of the jaw bone 2. The implant can comprise or be connected to an attachment component 5, for example in the form of a spacer sleeve. The attachment component will in turn support a prosthesis 6 shown symbolically in Figure 1. Figure 1 illustrates a case where bone absorption 7 has occurred in the jaw bone, which bone absorption means that the soft tissue 3 subsides and that a conspicuous space 8 may form between in this case the upper parts 5a of the attachment component 5 and the bone. The space 8 can extend along much of the upper parts of the attachment components or implant. The space 8 in the present example thus has the effect that the upper part 5a is exposed, which is unacceptable from the esthetic point of view. In Figure 1, the extent of the bone absorption has been indicated by H, and this may often assume values of 1 mm or more.

In Figure 2, an implant according to the invention has been indicated by 4'. The implant in Figure 2 has a structure corresponding to the implant 4 in Figure 1. In accordance with the concept of the invention, the portion 4b' of the implant 4' has been provided with an upper groove 9 which extends in the peripheral direction of the portion 4b'. The groove extends all round the periphery in a cross-sectional plane at right angles to the plane of the figure in Figure 2. The cross-sectional plane is at right angles to the longitudinal axis 4e of the implant. The groove 9 is placed against the upper edge 2b of the bone 2. The outer surface of the portion has been indicated by 4c, and the opposite surface of the jaw bone by 2c. In the case illustrated according to Figure 2, the groove 9 is greatly enlarged for the sake of clarity. In an embodiment which is not part of the present invention, the groove can in principle be replaced with a set of recesses arranged along all or most of the peripheral extent. The groove or recesses are of such a nature, that bone movement and bone ingrowth are stimulated by the groove or by the set of recesses themselves. The ingrowth of bone, which is described in more detail below, forms, at the top, a barrier preventing soft tissue 3 from subsiding in the event of bone absorption as shown in Figure 1. The barrier thus prevents the bone 2 from subsiding along the outer surface of the upper parts of the implant and being followed by the soft tissue 3 in the manner shown in Figure 1. By means of the invention, bone absorption is counteracted and only a small space 8' (not shown) can form between the soft tissue 3 and the upper parts 5a' of the attachment component 5.

The soft tissue 3 can be allowed to bear with its inner surface 3a, in said hole, in contact against the outer surface 5b of the attachment component 5. The barrier thus prevents bone absorption, and the space 8' in which bacteria may possibly accumulate is considerably reduced or completely reduced in its extent and depth. The attachment component can be integrated with or applied to the implant.

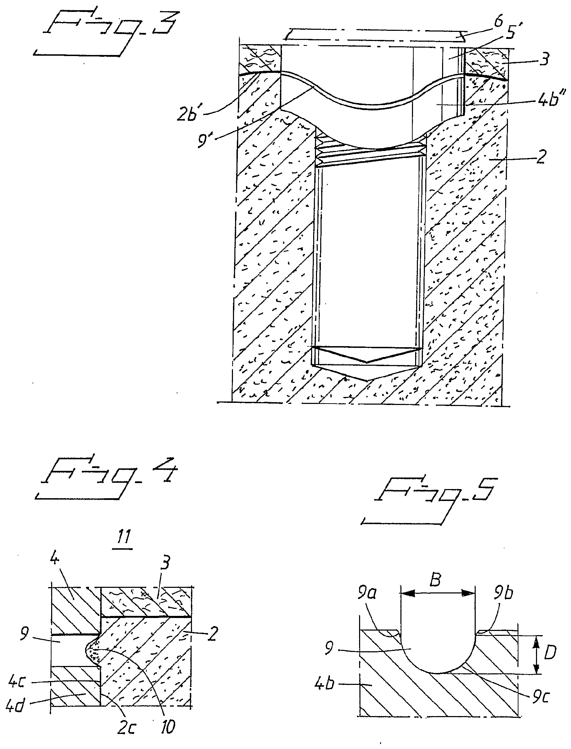

Figure 3 shows a second embodiment of the implant fitted in the jaw bone 2 and the soft tissue 3. The implant structure can be the same as indicated above, except that the portion 4b" is curved or arc-shaped so as to be able to follow a correspondingly curved or arc-shaped jaw bone edge 2b'. The portion supports or in this case includes an attachment component 5' which, at the bottom, adjoins the curved portion and, at the top, supports a structure or prosthesis 6. In this case too, a groove 9' is arranged at the upper parts of the portion. The groove 9' is placed opposite the upper edge 2b' of the jaw bone in a corresponding way to the groove 9 above. In this case too, the groove can extend along all or most of the peripheral extent of the portion. The groove 9' can, in the same way as above, alternatively consist of a set of recesses arranged in a manner corresponding to the groove. Further grooves can be arranged substantially parallel to the groove 9' on the portion 4b".

Figure 4 shows the groove structure in more detail. The groove 9 here is of the type which increases bone movement and ingrowth of bone in the groove by virtue of its structure. In Figure 4, the ingrowth of bone is symbolized by 10. The implant or the implant part 4d below the groove has maintained its integration with the jaw bone 2, i.e. the surfaces 2c and 4c are closed tight. The oral cavity is here represented by 11.

In accordance with Figure 5, the groove 9 is cup-shaped or semi-circular in cross section. As an alternative to the main semi-circular design, different variations of hyperbolic, elliptical or circular shapes are possible. Rectangular and square shapes can also be used. In these cases, however, it is important that the corners are rounded and are not sharp or provided with sharp edges. The groove or recess has been shown with transition parts 9a and 9b, and the actual cup shape or semi-circular shape by 9c. The width of the groove or of the recess is indicated by B and is measured at a position inside the bevels 9a and 9b. The depth of the groove is indicated by D. The width B is preferably ca. 110 µm and the depth D is preferably ca. 70 µm. As regards the extent of the groove or of the recesses in the circumferential direction, the expression "most of" means that at least 60% of the surface around the portion 4 will be provided with grooves and/or recesses. The groove or grooves or the recesses can be coordinated with correspondingly designed grooves and recesses on other parts of the implant.

The invention is not limited to the embodiment shown by way of example above, but is defined by the scope of the attached patent claims.

## Claims

1. An implant (1) designed to be fitted in a hole (2a) formed in jaw bone (2) and overlying soft tissue (3), and comprising a portion (4b') intended to be placed against the upper edge (2b) of the jaw bone,
wherein the portion is provided with a groove (9), wherein the groove extends all round the surface, is located at the upper parts of the portion (4b') and extends in a cross section at right angles to the longitudinal axis (4e) of the implant,
the groove having a depth (D) of 50 - 100 µm, a width (B) of 70 - 160 µm, and a cross section (9c) with a shape selected from the group consisting of: semi-circular, hyperbola, semi-elliptical, and rectangular or square with rounded corners,
wherein the implant further comprises an outer thread (4a) by means of which the implant can be screwed into the hole (2a).

2. The implant as claimed in claim 1, **characterized in that** two or more grooves, for example substantially parallel grooves, are arranged to be placed against the upper edge (2b) of the jaw bone.

3. The implant as claimed in claim 1 or 2, **characterized in that** each groove (9) has a depth (D) of 70 µm.

4. The implant as claimed in any of claims 1 - 3, **characterized in that** each groove (9) has a width (B) of 110 µm.

5. The implant according to any one of the preceding claims, **characterized in that** the groove is designed to stimulate bone movement and bone ingrowth.

6. The implant according to any one of the preceding claims, **characterized in that** the implant further comprises an attachment component that is integrated with the implant.

## Patentansprüche

1. Implantat (1), das vorgesehen ist, um in ein Loch (2a) eingepasst zu werden, das in Kieferknochen (2) und darüber liegendem Weichgewebe (3) gebildet ist, und welches einen Abschnitt (4b') umfasst, der gegen den oberen Rand (2b) des Kieferknochens platziert werden soll,
wobei der Abschnitt mit einer Rille (9) ausgestattet ist, wobei sich die Rille vollständig um die Oberfläche herum erstreckt, sich an den oberen Teilen des Abschnitts (4b') befindet und sich im Querschnitt in rechten Winkeln zu der Längsachse (4e) des Implantats erstreckt,
wobei die Rille eine Tiefe (D) von 50 bis 100 µm, eine Breite (B) von 70 bis 160 µm und einen Querschnitt (9c) mit einer Form ausgewählt aus der Gruppe bestehend aus halbkreisförmig, hyperbelförmig, halbelliptisch und rechteckig oder quadratisch mit abgerundeten Ecken aufweist,
wobei das Implantat ferner ein Außengewinde (4a) umfasst, mit dem das Implantat in das Loch (2a) geschraubt werden kann.

2. Implantat nach Anspruch 1, **dadurch gekennzeichnet, dass** zwei oder mehr Rillen, beispielsweise im Wesentlichen parallele Rillen, angeordnet sind, um gegen den oberen Rand (2b) des Kieferknochens platziert zu werden.

3. Implantat nach Anspruch 1 oder 2, **dadurch gekennzeichnet, dass** jede Rille (9) eine Tiefe (D) von 70 µm aufweist.

4. Implantat nach einem der Ansprüche 1 bis 3, **dadurch gekennzeichnet, dass** jede Rille (9) eine Breite (B) von 110 µm aufweist.

5. Implantat nach einem der vorhergehenden Ansprüche, **dadurch gekennzeichnet, dass** die Rille vorgesehen ist, um Knochenbewegung und Knocheneinwachsen zu stimulieren.

6. Implantat nach einem der vorhergehenden Ansprüche, **dadurch gekennzeichnet, dass** das Implantat ferner eine Befestigungskomponente umfasst, die in das Implantat integriert ist.

## Revendications

1. Implant (1) conçu pour être ajusté dans un trou (2a) formé dans une mâchoire (2) et un tissu mou susjacent (3), et comprenant une partie (4b') à placer contre le bord supérieur (2b) de la mâchoire,
dans lequel la partie est munie d'une rainure (9), dans lequel la rainure s'étend tout autour de la surface, se trouve au niveau des parties supérieures de la partie (4b') et s'étend dans une coupe transversale à des angles droits par rapport à l'axe longitudinal (4e) de l'implant,
la rainure ayant une profondeur (D) de 50 à 100 µm, une largeur (B) de 70 à 160 µm, et une coupe transversale (9c) ayant une forme sélectionnée dans le groupe constitué de : semi-circulaire, hyperbolique, semi-elliptique, et rectangulaire ou carrée avec des coins arrondis,
dans lequel l'implant comprend en outre un filetage extérieur (4a) au moyen duquel l'implant peut être vissé dans le trou (2a).

2. Implant selon dans la revendication 1, **caractérisé en ce que** deux rainures ou plus, par exemple des rainures sensiblement parallèles, sont agencées pour être placées contre le bord supérieur (2b) de la mâchoire.

3. Implant selon la revendication 1 ou 2, **caractérisé en ce que** chaque rainure (9) a une profondeur (D) de 70 µm.

4. Implant selon l'une quelconque des revendications 1 à 3, **caractérisé en ce que** chaque rainure (9) une largeur (B) de 110 µm.

5. Implant selon l'une quelconque des revendications précédentes, **caractérisé en ce que** la rainure est conçue pour stimuler le mouvement osseux et l'interposition osseuse.

6. Implant selon l'une quelconque des revendications précédentes, **caractérisé en ce que** l'implant comprend en outre un composant de fixation qui fait partie intégrante de l'implant.
